# EUROPEAN PATENT SPECIFICATION

(11) **EP 2 758 223 B1**
(45) Date of publication and mention of the grant of the patent: **21.03.2018**
(21) Application number: 12753664.7
(22) Date of filing: 30.08.2012
(51) Int. Cl.: B29C 49/04, B60K 15/03

(54) **OPERATING FLUID TANK FOR A MOTOR VEHICLE**
BETRIEBSFLÜSSIGKEITSTANK FÜR EIN KRAFTFAHRZEUG
RÉSERVOIR DE FLUIDE FONCTIONNEL POUR UN VÉHICULE À MOTEUR

(30) Priority: 21.09.2011 DE 102011113845
(43) Date of publication of application: 30.07.2014
(73) Proprietor: Kautex Textron GmbH & Co. KG, 53229 Bonn (DE)
(72) Inventor: HÜTZEN, Markus, 53757 Sankt Augustin (DE); KARSCH, Ulrich, 53859 Niederkassel (DE); SPITZER, Sebastian, 01159 Dresden (DE)
(74) Representative: Kierdorf Ritschel Richly
(86) International application number: PCT/EP2012/003633
(87) International publication number: WO 2013/041180

(56) References cited:
- US-A1- 2002 110 658
- US-A1- 2011 140 314
- US-A1- 2011 215 102

## Description

The invention relates to an operating fluid tank for a motor vehicle, in particular a fuel tank or secondary fluid tank composed of plastic having a substantially closed tank body composed of thermoplastic material, preferably based on polyethylene.

Fuel tanks, in particular, have either a multi-layer wall structure comprising barrier layers for hydrocarbons or are made resistant to hydrocarbons by chemical treatment (fluorination, sulphonation). Plastic fuel tanks based on HDPE have the advantage that they can be produced with a relatively complex three-dimensional shape and are relatively dimensionally stable when unpressurized. Moreover, such tanks are capable of absorbing forces due to impact. Brief deformation of the fuel tank due to impact or falling does not normally lead to permanent changes in shape.

To compensate for pressure differences relative to atmospheric pressure in the interior of the tank, there is a fundamentally known practice of equipping the fuel tank with internal, column-type reinforcing elements. The practice of stabilizing fuel tanks composed of plastic and fuel tanks composed of metal from the outside with straps is also known. Straps essentially prevent bulging of the fuel tank due to pressure differences and/or owing to the mass of the fuel. Moreover, straps also serve to fix the fuel tank on the vehicle.

Especially in connection with fuel tanks based on polyethylene, the stabilization of the tank is particularly important inasmuch as polyethylene has the property of flowing under prolonged pressure or tensile stress, even at room temperature, with the result that the known stabilization measures in the form of support elements within the tank do not provide satisfactory results under all circumstances. The provision of straps likewise fails to take account of the problem described above.

Stabilization measures for fuel tanks composed of plastic are becoming increasingly important with the introduction of hybrid vehicles. Fuel tanks on petrol-powered vehicles are vented via a fuel vapour filter and are operated in a substantially unpressurized state. During the operation of the internal combustion engine of the motor vehicle, the fuel vapour filter is purged by a reverse flow, with the air required for the internal combustion engine being drawn in via the fuel vapour filter during the operating phases of the internal combustion engine. The adsorption capacity of the fuel vapour filter is designed accordingly.

With hybrid vehicles, the number of operating cycles and time in operation of the internal combustion engine are greatly reduced. Consequently, the number and duration of possible reverse-flow purge cycles for the fuel vapour filter are likewise limited. This requires appropriate dimensioning of the fuel vapour filter, and there are often limits to this on account of the installation space. It is therefore desirable to shut off fuel tanks for hybrid vehicles from the atmosphere from time to time, and hence there may be pressure fluctuations of about +400 mbar to -150 mbar in the fuel tank relative to atmosphere.

These pressure fluctuations are heavily dependent on the amount of gas that forms in the tank. Depending on the vapour pressure gradient, the fuel tends to release gas to a greater or lesser extent. This gas release behaviour is temperature-dependent, and there may therefore be an increase in pressure in the tank, especially if the fuel heats up to a great extent.

Pressure fluctuations can also occur in urea tanks for catalytic removal of nitrogen oxides from exhaust gas, for example, e.g. as the liquid thaws and/or freezes. US 2011/215102 A1 discloses an operating fluid tank for a vehicle according to the preamble of claim 1 and a process for producing an operating fluid tank for a vehicle according to the preamble of claim 7. It is the underlying object of the invention to provide a tank composed of plastic which takes account of the problems described above.

The object is achieved by an operating fluid tank for a motor vehicle, in particular by a fuel tank or secondary fluid tank composed of plastic having a substantially closed tank body composed of thermoplastic material, preferably based on polyethylene, and having a jacket composed of a multi-layer composite material surrounding at least parts of the tank body, wherein the jacket comprises at least one self-supporting shell comprising at least one rigid foam layer. According to the invention, a jacket of this kind on the one hand has a stabilizing effect and, on the other hand, said jacket can insulate the tank, this having the effect, apart from stabilizing the tank, that the pressure within the tank is minimized since an increased outside temperature is not passed on to the fuel in the tank, for example. Moreover, a measure of this kind can contribute to a reduction in sloshing noises due to the fuel, which are caused by the driving dynamics and would be passed on unattenuated to the passenger cell in the absence of insulation.

In a particularly expedient variant of the tank of the invention, it is envisaged that the jacket comprises preferably two, self-supporting shells. It is particularly advantageous if the jacket or shell comprises at least one rigid foam layer, which can be of relatively thick design. In this way, reinforcement of the tank body is achieved by applying a sandwich structure, while stabilization and insulation is simultaneously achieved with a lightweight design.

In a particularly expedient variant of the tank according to the invention, it is envisaged that the jacket or shell is of three-layer construction and comprises a central insulating layer, in particular as a rigid foam layer. The rigid foam layer can be composed of polyurethane foam, PVC foam, PP foam, PE foam, PET foam or even of polystyrene foam, for example.

The jacket/shell can comprise at least one surface layer composed of a thermoset or thermoplastic. The surface layer is preferably fibre-reinforced.

A further surface layer or even both surface layers can comprise a heat shield material.

For example, the jacket/shell can comprise an aluminium foil on the outside, and an HDPE layer or an LDPE layer can be provided on the inside. If the inner surface layer comprises an LDPE layer, this promotes a material connection between the jacket or shell and the outer wall of the tank body.

If the outer surface layer of the jacket or of one of the shells is composed of an aluminium foil or some other metal foil, for example, this makes an additional contribution to the thermal insulation of the tank. A layer of this kind shields the tank from radiant heat.

It is also possible, for example, for one or more surface layers of the jacket or shell to comprise a fibre composite material. Examples of suitable fibre composite materials are continuous fibres embedded in a thermoset or thermoplastic matrix. Corresponding shells may have been produced from "pre-pregs" (preimpregnated fibre) or organometallic sheets, for example. The continuous fibres can be in the form of a pure unidirectional layer, as a woven fabric or as a non-crimp fabric.

It is expedient if the jacket completely surrounds the tank body. According to the invention, "completely" means, of course, that any openings in the tank, passages through the tank and connections on the tank are left free by the jacket.

In a preferred variant of the tank according to the invention, it is envisaged that the jacket is connected materially to the tank body.

It is expedient if the jacket is composed of two shells, which each have a sandwich structure and have been prefabricated to match the external shape of the finished fuel tank. It is expedient if these shells are designed as a sandwich structure, that is to say that they each have relatively thin external surface layers, whereas an inner layer consisting of an open- or closed-cell foam makes a significant contribution to the overall strength of the shell resulting from the composite bonding of the surface layer and the supporting layer. This layer can be a PU rigid foam layer, for example, which can have a thickness of between a few millimetres and several centimetres. The thickness of a central layer, inner layer or lower supporting layer contributes, in particular, to the strength of the overall system because this forms a composite structure with a surface layer, with the result that when subjected to bending stress, a tensile load in particular is absorbed by the surface layers. Under bending stress, the supporting layer forms the neutral axis. By means of the thickness of the supporting layer, it is possible in the overall system, given composite bonding, to shift the zone of tensile/compressive stress selectively into the region of the surface layer, which can be fibre-reinforced, for example, and can thus help to give the system a high bending strength. Moreover, a rigid foam layer of this kind also contributes to the thermal and acoustic insulation of the fuel tank.

The object underlying the invention is furthermore achieved by a process for producing a tank composed of thermoplastic material, as defined by the features of claim 7. The tank body can have been obtained by extrusion blow moulding, for example. In an expedient and advantageous embodiment of the process according to the invention, it is envisaged that said process comprises extrusion blow moulding a tubular preform or a plurality of web-shaped sheet-like preforms in a multi-part blow mould, the shell being placed in the blow mould and the preform or preforms being moulded against the shell.

For example, the shell can have been placed in the mould as an insert by means of a robot in a known manner. The shell does not have to fully reproduce the respective half-contour of the tank. In a variant of the process according to the invention which is, however, preferred, two shells are prefabricated in each case, each forming one half-contour of the tank. The shells are placed in two mutually complementary cavities of a blow mould, said cavities forming a mould cavity. A tank body is moulded into the shells from a tube, a split tube or from a plurality of web-shaped sheet-like preforms of plasticized plastic, giving rise to a high-strength composite consisting of a preferably multi-layer tank body based on HDPE and two solid shells, each of which has in itself a self-supporting sandwich structure.

The shells can have been obtained in a separate production process, e.g. by deep drawing, slush moulding or a "RIM" process (reaction injection moulding) or even by rotational sintering.

The multi-layer sandwich composite structure of the shells or jacket can be configured in a very wide variety of different ways, depending on requirements. One layer can serve to bond the composite to the tank, one layer can serve for insulating purposes, and another layer can serve to increase mechanical strength. Possible materials for the layers include materials similar to those for the tank wall or dissimilar materials, e.g. plastics, fibre composite materials, metals, aluminium foams, organic materials such as wood or paperboard or other organic fibres.

The production of shells as a sandwich composite can include the cutting to size of dry woven fabric webs, the insertion of woven fabric webs into a multi-part horizontal mould, the wetting and foaming of the woven fabric webs with a PU foam and the closure of the mould to form a contoured shell, for example. This shell can then be cut/trimmed in a finishing step, for example.

As an alternative, the shells can be produced by compressing the individual components with the application of heat. However, it is also possible for a composite of the individual components to be produced by joint hot forming of the individual components, e.g. by pressing. This can also be accomplished with the use of adhesion promoters in the form of hot melt adhesives/LDPE and with the application of heat. In this case, for example, cutting/trimming of the shells can likewise be provided as a finishing step.

According to one aspect of the invention, the production process for the tank is distinguished by the fact that at least two mutually complementary shells are introduced into the blow mould, forming a completely closed jacket for the finished tank. The shells which reinforce the tank body do not have to be joined all the way round, these providing strength to the system, whereas the substantially closed tank body ensures the leaktightness of the system. Accordingly, the tank body can have been produced from a multi-layer extrudate with barrier layers for hydrocarbons.

For example, the preforms can be extruded with at least one barrier layer for hydrocarbons and with at least one outer adhesion promoter layer, the outer adhesion promoter layer being brought into contact with at least one shell in such a way that the shell enters into a material bond with the tank body.

As an alternative, it is also possible, however, for the outer layer of the preforms, i.e. that layer of the preforms which faces the shells to be composed of an HDPE, whereas a surface layer of the shells consists of an LDPE, which enters into a material bond with the outer HDPE layer of the preforms during the production of the tank.

Of course, positive engagement of the shells or the jacket with the tank body is also appropriate and desirable. The mould can be designed in such a way that the material is blown behind part of the sandwich-type half-shells placed therein, ensuring that they are connected in a substantially permanent manner to the tank body.

In a preferred variant of the tank according to the invention, it is envisaged that fastening means for fastening the tank in the vehicle are provided in the jacket surrounding the tank body. For example, fastening lugs can be incorporated into the jacket during moulding. By means of the fastening lugs, the finished tank can be fixed in the installed position on the motor vehicle, thus eliminating the need for the use of straps.

The invention is explained below by means of an illustrative embodiment illustrated in the drawings, in which:
- Fig.1: shows a perspective view of a fuel tank according to the invention stabilized/reinforced by two half-shells,
- Fig. 2: shows an enlarged representation of a section through one of the shells, illustrating the layer structure of the shell,
- Fig. 3: shows a schematic view of the structure of the jacket of the fuel tank;
- Fig. 4: shows a schematic representation of a blow mould for producing the fuel tank according to the invention as two shells are introduced into the cavities of the blow mould halves,
- Fig. 5: shows a view corresponding to Fig. 4, which illustrates the process step of extruding preforms composed of thermoplastic material,
- Fig. 6: shows a corresponding view, which illustrates the moulding of the tank body against the shells placed in the blow mould, and
- Fig. 7: shows a view of the closed blow mould during the final blow moulding of the tank body.

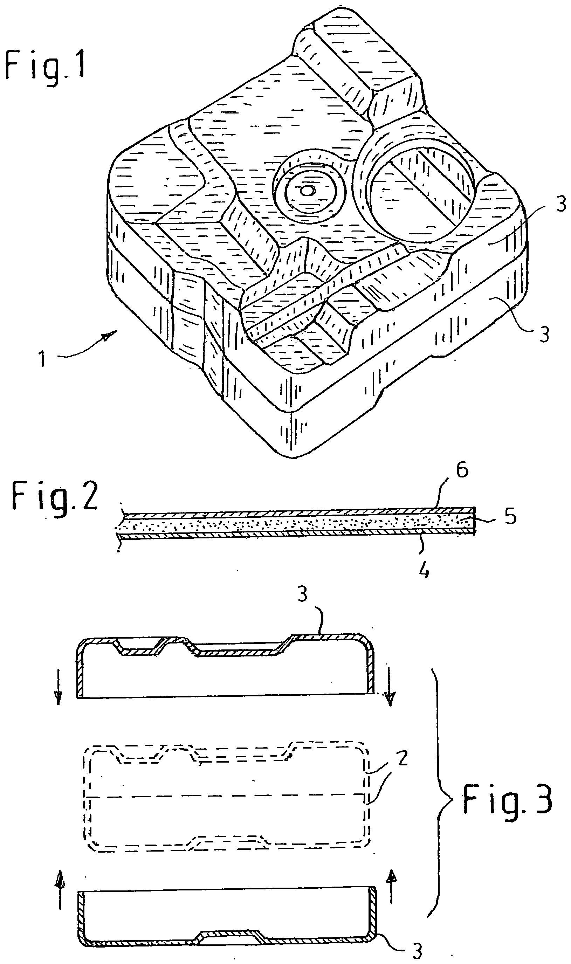

Fig. 1 shows a schematic representation of the finished fuel tank 1 according to the invention. The fuel tank 1 according to the invention comprises an inner tank body 2 composed of thermoplastic material and an outer jacket, which is made up of two mutually complementary shells 3 composed of a multi-layer composite material in the illustrative embodiment described. For the sake of simplicity, a filler tube moulded onto the fuel tank is not shown.

In the illustrative embodiment described, the shells 3 have a three-layer structure overall, comprising an inner surface layer 4, a central supporting layer 5 and an outer surface layer 6. The terms "inner" and "outer" refer to the installed position of the shells 3 on the finished fuel tank 1, that is to say the inner surface layer 4 faces the outer wall of the tank body 2, whereas the outer surface layer 6 forms the outside of the fuel tank 1.

As already mentioned above, the shells have been produced as fully shaped, finished, self-supporting elements in a separate operation from the production of the tank body 2. The surface layers 4 and 6 form an intimate bond with the central supporting layer 5 of the shells 3, the supporting layer 5 consisting of a PU rigid foam, for example, and the surface layers 4 and 5 each consisting of a woven fibre/non-crimp fibre material, which is penetrated by the material of the supporting layer 5 or is partially penetrated or impregnated. The supporting layer 5 here is approximately twice to three times as thick as the surface layers 4 and 6 and, not least because of its depth, is responsible for the mechanical load bearing capacity and stability of the shells 3.

As can be seen from Fig. 3, the shells 3 can be joined together to form a closed jacket or a closed casing for the tank body 2.

The tank body 2 of the fuel tank is produced in a conventional manner by extrusion blow moulding, with the tank wall of the tank body having a preferably six-layer layer structure, preferably comprising two outer HDPE layers, at least one recyclate layer and an inner EVOH layer, in each case embedded in adhesion promoter layers, as a barrier for hydrocarbons. The outer layers of the tank body 2 are preferably composed at least predominantly of an HDPE, while the adhesion promoter layers are composed of an LDPE.

As already mentioned above, the outer layer of the tank body 2 can be composed of an LDPE, which can enter into a material bond with the shells 3 during the production of the fuel tank 1.

In a simple variant for the production of the fuel tank 1, provision can be made to produce the tank body from a tubular extrudate, with a tubular preform being inserted between the opened parts of a conventional blow mould. The shells 3 can have been placed in the opened parts of the mould or in the cavities of the blow mould beforehand by means of robots, for example. The blow mould then closes around the tube and the preform is blown into the shells 3 placed in the mould. During this process, there can have been a flow of plastic of the tank body 2 behind part of the shells 3, thus producing positive engagement between the shells 3 and the tank body 2.

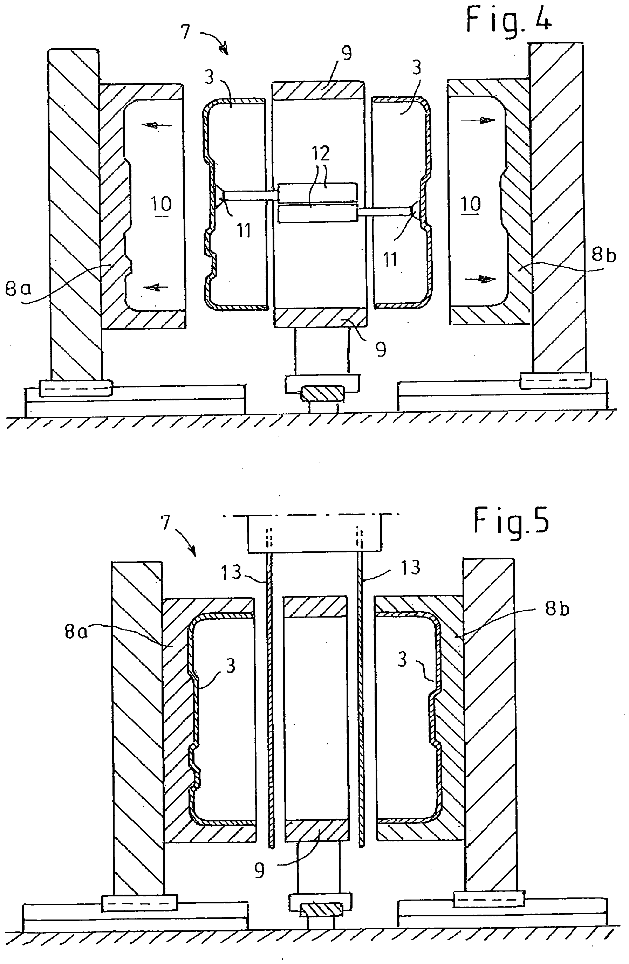

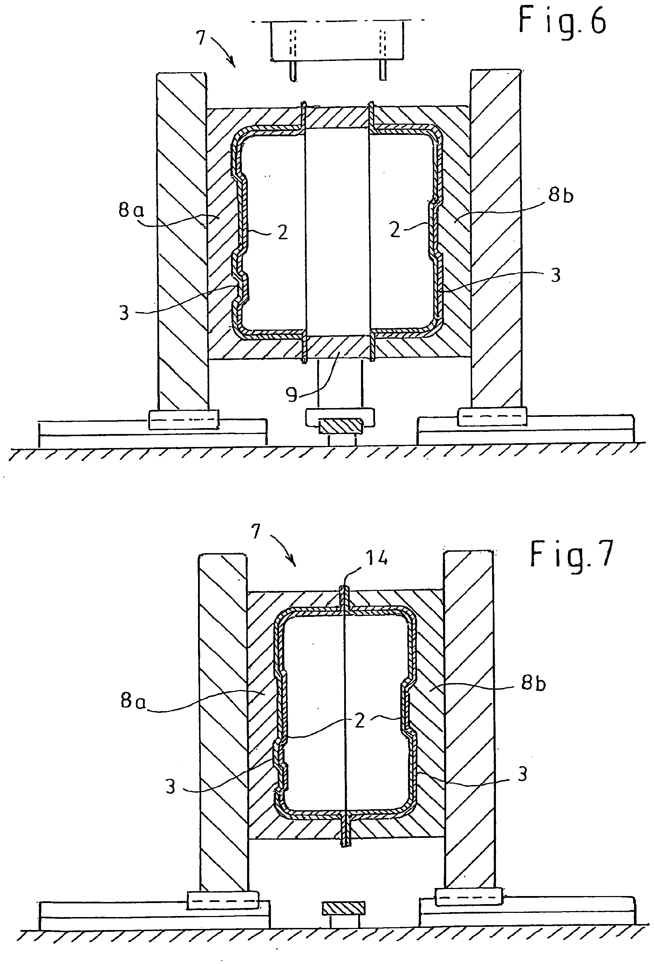

Another variant of the production of the fuel tank 1 is illustrated in Figures 4 to 7.

According to these, the production of the fuel tank according to the invention takes place in a blow mould 7 with a total of three parts, comprising two outer moulds 8a, 8b and a central die 9. The central die 9 is used primarily to seal the cavity formed by the outer moulds 8a, 8b for the purpose of moulding the wall of the tank body 2. Secondarily, the central die 9 is used to introduce internally fitted components, such as inserts, including also the shells 3 for example, into the cavities 10 of the outer moulds 8a, 8b.

Of course, it is also possible to use the central die 9 to position internally fitted components on the inner wall of the tank body 2. However, this is not the subject matter of the present application.

Arranged between the outer moulds 8a, 8b, which can be moved towards one another and away from one another in the plane of the drawing, is the mentioned central die 9, which can be moved transversely to the movement of the outer moulds 8a, 8b, i.e. into and out of the plane of the drawing. The central die 9 comprises component carriers 11, which can be moved in and out in the direction of the outer moulds 8a, 8b, starting from the frame formed by the central die 9, by pneumatic cylinders 12. In the process step illustrated in Fig. 4, the component carriers 11 are fitted with the shells 3, which are first of all brought into the outer moulds 8a, 8b and are placed in the cavities 10 there. They can be fixed there by means of a vacuum, for example. In a further process step, sheet-like preforms 13 in the form of webs or sections are extruded continuously in a hanging position, i.e. in the direction of gravity, from an extrusion head. As mentioned above, the preforms 13 are designed as six-layer co-extrudates based on HDPE with barrier layers of EVOH. In a further process step, the outer moulds 8a, 8b are closed against the central die 9, with the outer moulds 8a, 8b in each case clamping the preforms 13 against the central die 9.

The blow mould 7 is then moved out from under the extrusion head in order to avoid hindering the emergence of the continuously extruded preforms 13.

The preforms 13 are then brought up against the shells 3 by the application of differential pressure, e.g. by evacuating the cavities 10 or by using blowing air to press them against the inner wall of the cavities 10. Through heat transfer by contact from the preforms 13 at melting temperature or through flow around the back as permitted by apertures in the shells 3, an intimate connection is brought about between the shells 3 and the tank body 2.

In a further process step, internally fitted components, for example, can be introduced via the central die 9 into the half shells, which are still at melting temperature. The abovementioned component carriers, for example, can likewise be used for this purpose. Finally, the central die 9 is removed from between the outer moulds 8a, 8b, and these are closed upon one another, with the preforms 13, each moulded into half shells, being welded together in the region of a peripheral pinch-off edge 14 to give the finished fuel tank 1. Connecting the shells 3 to one another in the region of the peripheral pinch-off edge or in the region of the joints of the shells 3 is not necessarily required.

### List of reference signs

- 1: operating fluid tank
- 2: tank body
- 3: shells
- 4: inner surface layer
- 5: central supporting layer
- 6: outer surface layer
- 7: blow moulding tool
- 8a,b: outer moulds
- 9: central die
- 10: cavities
- 11: component carrier
- 12: pneumatic cylinder
- 13: preform
- 14: pinch-off edge

- PE: polyethylene
- HDPE: high density polyethylene
- LDPE: low density polyethylene
- EVOH: ethylene vinyl alcohol

## Claims

1. Operating fluid tank (1) for a motor vehicle, in particular a fuel tank or secondary fluid tank composed of plastic having a substantially closed tank body (2) composed of thermoplastic material, preferably based on polyethylene, and having a jacket composed of a multi-layer composite material surrounding at least parts of the tank body, **characterised in that** the jacket comprises at least one self-supporting shell (3) comprising at least one rigid foam layer.

2. Operating fluid tank according to Claim 1, **characterized in that** the jacket comprises preferably two, self-supporting shells (3).

3. Operating fluid tank according to one of Claims 1 to 2, **characterized in that** the jacket is of at least two-layer, preferably three-layer, construction and comprises a central supporting layer (5) as an insulating layer, in particular as a rigid foam layer.

4. Operating fluid tank according to one of Claims 1 to 3, **characterized in that** the jacket comprises at least one surface layer (4, 6) composed of a fibre composite material.

5. Operating fluid tank according to one of Claims 1 to 4, **characterized in that** the jacket completely surrounds the tank body.

6. Operating fluid tank according to one of Claims 1 to 5, **characterized in that** the jacket is connected materially to the tank body.

7. Process for producing an operating fluid tank for a motor vehicle, in particular a fuel tank or secondary fluid tank composed of thermoplastic material, **characterised in that** the process comprises moulding a tank body onto or into at least one self-supporting rigid shell composed of a multi-layer composite material, wherein the self-supporting rigid shell (3) comprises at least one rigid foam layer.

8. Process according to Claim 7, comprising extrusion blow moulding a tubular preform or a plurality of web-shaped sheet-like preforms in a multi-part blow mould, the shell (3) being placed in the blow mould and the preform or preforms being moulded against the shell. (3)

9. Process according to one of Claims 7 or 8, **characterized in that** at least two mutually complementary shells (3) are introduced into the mould, forming a completely closed jacket for the finished tank.

10. Process according to one of Claims 7 to 9, **characterized in that** the preforms are extruded with at least one barrier layer for hydrocarbons and with at least one outer adhesion promoter layer, the outer adhesion promoter layer being brought into contact with at least one shell. (3)

## Patentansprüche

1. Betriebsflüssigkeitstank (1) für ein Kraftfahrzeug, insbesondere ein Kraftstofftank oder sekundärer Flüssigkeitstank, der aus Kunststoff gebildet ist, mit einem im Wesentlichen geschlossenen Tankkörper (2), der aus Thermoplastmaterial gebildet ist, vorzugsweise auf Grundlage von Polyethylen, und mit einer Umhüllung, die aus Mehrschichtverbundmaterial gebildet ist, das mindestens Teile des Tankkörpers umgibt, **dadurch gekennzeichnet, dass** die Umhüllung mindestens eine freitragende Schale (3) aufweist, die mindestens eine starre Schaumschicht aufweist.

2. Betriebsflüssigkeitstank nach Anspruch 1, **dadurch gekennzeichnet, dass** die Umhüllung vorzugsweise zwei freitragende Schalen (3) aufweist.

3. Betriebsflüssigkeitstank nach einem der Ansprüche 1 bis 2, **dadurch gekennzeichnet, dass** die Umhüllung mindestens einen zweischichtigen, vorzugsweise dreischichtigen Bau aufweist und eine zentrale Trageschicht (5) als eine Isolierschicht, insbesondere als eine starre Schaumschicht aufweist.

4. Betriebsflüssigkeitstank nach einem der Ansprüche 1 bis 3, **dadurch gekennzeichnet, dass** die Umhüllung mindestens eine Oberflächenschicht (4, 6) aufweist, die aus einem Faserverbundmaterial gebildet ist.

5. Betriebsflüssigkeitstank nach einem der Ansprüche 1 bis 4, **dadurch gekennzeichnet, dass** die Umhüllung den Tankkörper vollständig umgibt.

6. Betriebsflüssigkeitstank nach einem der Ansprüche 1 bis 5, **dadurch gekennzeichnet, dass** die Umhüllung stofflich mit dem Tankkörper verbunden ist.

7. Prozess zum Erzeugen eines Betriebsflüssigkeitstanks für ein Kraftfahrzeug, insbesondere eines Kraftstofftanks oder sekundären Flüssigkeitstanks, der aus Thermoplastmaterial gebildet ist, **dadurch gekennzeichnet, dass** der Prozess das Formen eines Tankkörpers auf oder in mindestens eine freitragende starre Schale, die aus Mehrschichtverbundmaterial gebildet ist, aufweist, wobei die freitragende starre Schale (3) mindestens eine starre Schaumschicht aufweist.

8. Prozess nach Anspruch 7, aufweisend das Extrusionsblasformen einer röhrenförmigen Vorform oder von mehreren stegförmigen bahnartigen Vorformen in einer mehrteiligen Blasform, wobei die Schale (3) in der Blasform angeordnet wird und die Vorform oder Vorformen an die Schale angeformt werden.

9. Prozess nach einem der Ansprüche 7 oder 8, **dadurch gekennzeichnet, dass** mindestens zwei zueinander komplementäre Schalen (3) in die Form eingeführt werden, die eine vollständig geschlossene Umhüllung für den fertiggestellten Tank ausbilden.

10. Prozess nach einem der Ansprüche 7 bis 9, **dadurch gekennzeichnet, dass** die Vorformen mit mindestens einer Sperrschicht für Kohlenwasserstoffe und mit mindestens einer Außenadhäsionspromoterschicht extrudiert werden, wobei die Außenadhäsionspromoterschicht mit mindestens einer Schale (3) in Kontakt gebracht wird.

## Revendications

1. Réservoir de fluide fonctionnel (1) pour un véhicule à moteur, en particulier un réservoir de carburant ou un réservoir de fluide secondaire composé de plastique ayant un corps de réservoir sensiblement fermé (2) composé de matériau thermoplastique, de préférence à base de polyéthylène, et ayant une enveloppe composée d'un matériau composite multicouche entourant au moins des parties du corps de réservoir, **caractérisé en ce que** l'enveloppe comprend au moins une coque autoportante (3) comprenant au moins une couche de mousse rigide.

2. Réservoir de fluide fonctionnel selon la revendication 1, **caractérisé en ce que** l'enveloppe comprend de préférence deux coques autoportantes (3).

3. Réservoir de fluide fonctionnel selon une des revendications 1 à 2, **caractérisé en ce que** l'enveloppe est d'une construction au moins bicouche, de préférence tricouche, et comprend une couche de support centrale (5) sous la forme d'une couche isolante, en particulier sous la forme d'une couche de mousse rigide.

4. Réservoir de fluide fonctionnel selon une des revendications 1 à 3, **caractérisé en ce que** l'enveloppe comprend au moins une couche de surface (4, 6) composée d'un matériau composite fibreux.

5. Réservoir de fluide fonctionnel selon une des revendications 1 à 4, **caractérisé en ce que** l'enveloppe entoure complètement le corps de réservoir.

6. Réservoir de fluide fonctionnel selon une des revendications 1 à 5, **caractérisé en ce que** l'enveloppe est reliée matériellement au corps de réservoir.

7. Procédé de production d'un réservoir de fluide fonctionnel pour un véhicule à moteur, en particulier un réservoir de carburant ou un réservoir de fluide secondaire composé de matériau thermoplastique, **caractérisé en ce que** le procédé comprend le moulage d'un corps de réservoir sur ou dans au moins une coque rigide autoportante composée d'un matériau composite multicouche, la coque rigide autoportante (3) comprenant au moins une couche de mousse rigide.

8. Procédé selon la revendication 7, comprenant le moulage par extrusion-soufflage d'une préforme tubulaire ou d'une pluralité de préformes de type feuille en forme de bande dans un moule de soufflage en plusieurs parties, la coque (3) étant placée dans le moule de soufflage et la préforme ou les préformes étant moulées contre la coque.

9. Procédé selon une des revendications 7 ou 8, **caractérisé en ce qu'**au moins deux coques mutuellement complémentaires (3) sont introduites dans le moule, formant une enveloppe complètement fermée pour le réservoir fini.

10. Procédé selon une des revendications 7 à 9, **caractérisé en ce que** les préformes sont extrudées avec au moins une couche barrière pour hydrocarbures et avec au moins une couche externe de promoteur d'adhérence, la couche externe de promoteur d'adhérence étant mise en contact avec au moins une coque (3).
